**Europäisches Patentamt**

**European Patent Office**

**Office européen des brevets**

(19)

(11) Numéro de publication : **0 119 931**
**B1**

(12) **FASCICULE DE BREVET EUROPÉEN**

(45) Date de publication du fascicule du brevet :
28.09.88

(51) Int. Cl.⁴ : **F 26 B 23/00**, F 26 B 21/00

(21) Numéro de dépôt : 84400540.5

(22) Date de dépôt : 16.03.84

(54) **Procédé et installation de séchage en continu adaptés à l'utilisation de pompes à chaleur.**

(30) Priorité : 18.03.83 FR 8304489

(43) Date de publication de la demande :
26.09.84 Bulletin 84/39

(45) Mention de la délivrance du brevet :
28.09.88 Bulletin 88/39

(84) Etats contractants désignés :
**AT BE CH DE GB IT LI NL**

(56) Documents cités :
**EP-A- 0 079 523**
**DE-A- 2 941 037**
**FR-A- 2 304 045**
**FR-A- 2 461 907**
**US-A- 4 126 946**
**US-A- 4 336 279**

(73) Titulaire : **Aznavorian, Arachin**
**17 Rue Bosquet**
**F-75007 Paris (FR)**

(72) Inventeur : **Aznavorian, Arachin**
**17 Rue Bosquet**
**F-75007 Paris (FR)**

(74) Mandataire : **Lemonnier, André**
**Cabinet LEMONNIER 4, Boulevard Saint-Denis**
**F-75010 Paris (FR)**

## Description

La présente invention concerne un procédé de séchage en continu pour produits pour lesquels on doit ou on peut utiliser des températures croissantes durant le processus de séchage, ainsi que l'installation correspondante mettant en œuvre des pompes à chaleur.

Actuellement une grande partie des installations de séchage de produits dont le processus de séchage comporte la mise en œuvre de flux d'air à des températures croissantes, soit pour obtenir un séchage poussé, soit pour réaliser un traitement thermique (malt, briques, tuiles, etc.) ont un fonctionnement cyclique, ce qui nécessite de grandes variations de puissance thermique et de température pendant la durée de traitement. De plus, l'installation, dite par charges successives, n'est pas utilisable durant le chargement et le déchargement, soit environ 15 % du temps.

En général, la conception actuelle des installations destinées aux produits indiqués ci-dessus s'adapte difficilement à l'utilisation des pompes à chaleur en raison des débits d'air très élevés mis en jeu et des différences de température importantes entre l'air extrait et l'air insufflé. En effet, le rapport entre la quantité d'énergie fournie et celle consommée par une pompe à chaleur, appelé coefficient de performance, est inversement proportionnel à l'écart entre la température à laquelle la chaleur est récupérée (à l'évaporateur) et la température à laquelle la chaleur est restituée (au condensateur).

Dans FR-A-2.304.045 est décrit un procédé de séchage mettant en œuvre le brassage transversal multiple dans lequel le flux d'air de séchage circule à contre-courant du produit à sécher et transversalement en venant au contact dudit produit et dans lequel on introduit dans la zone correspondant à la fin du processus de séchage, un premier débit d'air représentant une fraction du débit total mis en œuvre, un débit d'air complémentaire, qui se combine avec ce premier débit d'air pour constituer le débit principal, étant introduit dans une zone où le produit a perdu la majeure partie de l'humidité à éliminer et au moins une partie des apports calorifiques est assurée par une pompe à chaleur. Toutefois, dans ce brevet, le débit d'air complémentaire chauffé par apports calorifiques depuis une pompe à chaleur est introduit au point où le produit à sécher a atteint son point de siccité maximale et où la température de l'air de séchage est maximale.

Dans certaines installations actuelles une source de chaleur à haute température est prévue en « série » en aval du condenseur de la pompe à chaleur pour obtenir les températures élevées auxquelles l'air qui, comme dans les installations classiques à chauffage par brûleurs, constitue le débit d'air total doit être insufflé dans l'installation pour atteindre le degré de siccité recherché.

Les applications de pompes à chaleur, bien que rentables, se heurtent à une limitation des performances et nécessitent des investissements importants, ces deux facteurs entraînant des temps d'amortissement relativement longs.

La présente invention permet de diminuer à la fois l'investissement et les frais d'exploitation en assurant une utilisation optimale des pompes à chaleur.

La présente invention a pour objet un procédé de séchage en continu, ou quasi continu, de produits pour lesquels on doit ou on peut utiliser des températures croissantes vers la fin du processus de séchage et mettant en œuvre un brassage transversal multiple dans lequel un flux d'air de séchage circule à contre-courant du produit à sécher et transversalement en venant au contact dudit produit et dans lequel on introduit dans la zone correspondant à la fin du processus de séchage, un premier débit d'air représentant une fraction du débit total mis en œuvre, un débit d'air complémentaire, qui se combine avec ce premier débit d'air pour constituer le débit total, étant introduit dans une zone où le produit a perdu la majeure partie de l'humidité à éliminer, dans lequel le premier débit d'air introduit dans la zone finale du processus de séchage, et représentant une faible fraction du débit total, fait l'objet d'apports de chaleur provenant d'une source à haute température, le débit d'air complémentaire étant, avant son introduction, chauffé sensiblement à la température moyenne atteinte par le premier débit d'air refroidi par évaporation de l'eau dans la zone finale et le débit d'air total faisant l'objet, dans la zone du processus de séchage située entre le point d'introduction du débit complémentaire et le point d'extraction du débit d'air total d'apports calorifiques à température ou températures moyennes, provenant d'au moins une pompe à chaleur.

Dans la présente description on appelle premier débit d'air celui qui est introduit à la fin du processus de séchage près de la sortie de l'enceinte et qui ne représente qu'une fraction réduite (par exemple 1/5ème) du débit d'air extrait ou débit d'air total mis en œuvre dans le processus de séchage et on appelle débit d'air complémentaire la fraction principale nécessaire pour compléter le débit d'air total. Dans la présente description également, on entend par « haute température » la température à laquelle doit être porté l'air pour que le produit puisse atteindre le degré de siccité requis et élever la température du produit jusqu'à la température finale du traitement et par « moyenne température » la température qui représente le compromis optimal entre, d'une part, les dimensions de l'installation (déterminées par la vitesse de séchage) et/ou les impératifs technologiques du produit et, d'autre part, le coefficient de performance de la pompe à chaleur mise en œuvre.

Avec le procédé conforme à l'invention, la chaleur nécessaire peut être apportée aux débits d'air assurant le séchage à partir de deux ou plusieurs sources ayant des températures différentes, l'apport calorifique de la source de chaleur à haute température qui n'a à chauffer que le premier débit d'air, c'est-à-dire une fraction, par exemple un cinquième, du débit d'air total, à la haute température requise, ne représente qu'une faible partie de l'apport calorifique total et l'apport calorifique de la ou des sources à moyennes températures peut être assuré par mise en œuvre de pompes à chaleur présentant un coefficient de performance élevé.

De préférence, le débit d'air de séchage passe de la zone des apports à haute température à la zone des apports à moyenne température en traversant une zone de transition sans apport calorifique dans laquelle sa température devient sensiblement égale à celle des apports calorifiques à moyenne température.

Selon une autre caractéristique du procédé, on règle le premier débit d'air pour obtenir, au point d'introduction du débit d'air complémentaire, une température sensiblement égale à celle des apports calorifiques à moyenne température.

L'installation pour la mise en œuvre du procédé est du type comprenant une enceinte allongée, un transporteur continu ou quasi continu transportant le produit à sécher sous une forme constituant une couche perméable à l'air, de l'entrée jusqu'à la sortie de l'enceinte, des moyens pour introduire dans la zone de l'enceinte voisine de la sortie du produit un premier débit d'air de séchage, des moyens pour faire traverser la couche de produits par ledit débit d'air ainsi que par le débit total et des moyens pour extraire le débit total dans la zone de l'enceinte voisine de l'entrée du produit avec des moyens pour introduire un débit complémentaire d'air de séchage dans une zone intermédiaire de l'enceinte et des moyens pour chauffer à haute température le premier débit d'air de séchage et lui apporter dans l'enceinte des calories à haute température et des moyens pour chauffer, avant son introduction, l'air constituant le débit complémentaire à moyenne température et des moyens pour apporter dans l'enceinte, entre le point d'introduction de ce débit complémentaire et le point d'extraction du débit d'air total des calories à moyenne température, ces deux derniers moyens étant constitués par le ou les condenseurs d'au moins une pompe à chaleur récupérant les calories de l'air humide extrait de l'installation.

Selon un mode de réalisation et lorsque la ou les pompes à chaleur sont entraînées par un ou des moteurs thermiques, les moyens pour chauffer le premier débit d'air et fournir les calories à haute température utilisent au moins pour partie les rejets thermiques du ou des moteurs.

Selon un autre mode de réalisation et lorsque la ou les pompes à chaleur alimentant les condenseurs à moyenne température sont entraînées par des moteurs électriques, les moyens pour chauffer le premier débit d'air et fournir les calories à haute température sont constitués par des pompes à chaleur fonctionnant à haute température distinctes desdites pompes à chaleur fonctionnant à moyenne température.

Selon une autre caractéristique l'air neuf constituant le débit complémentaire est préchauffé par passage sur un échangeur de refroidissement du condensat provenant des condenseurs des pompes à chaleur.

Selon une autre caractéristique de l'invention, les pompes à chaleur fonctionnent selon le système à condensation indirecte, leur condenseur réchauffant l'eau d'un circuit d'eau chaude alimentant des échangeurs de chauffage placés dans l'enceinte.

D'autres caractéristiques de la présente invention apparaîtront à la lecture de la description de modes de réalisation, faite ci-après avec référence aux dessins schématiques ci-annexés dans lesquels :

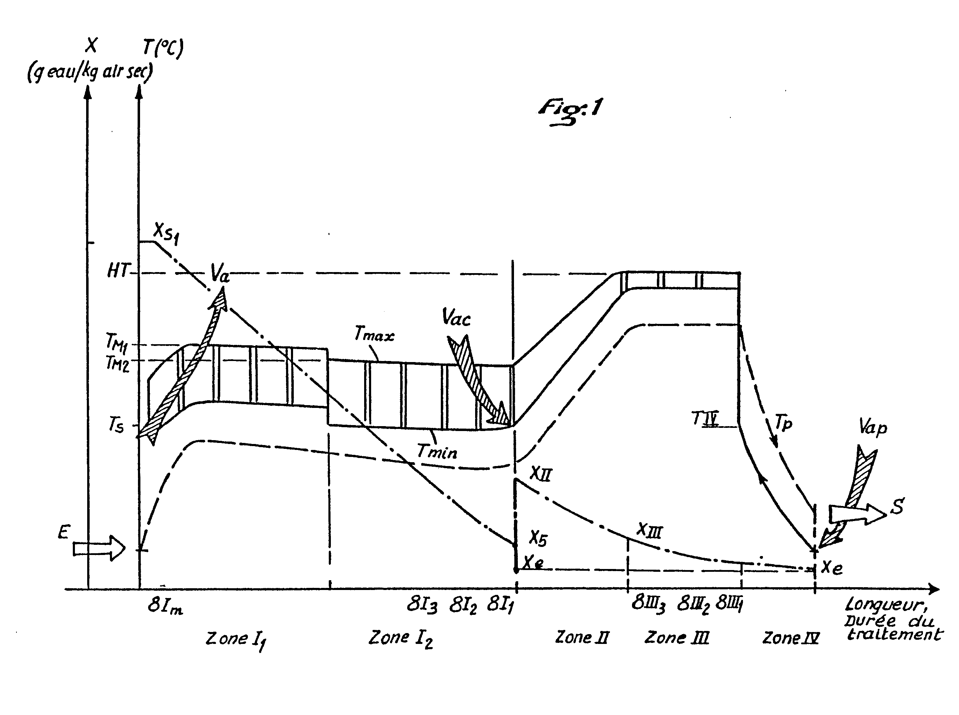

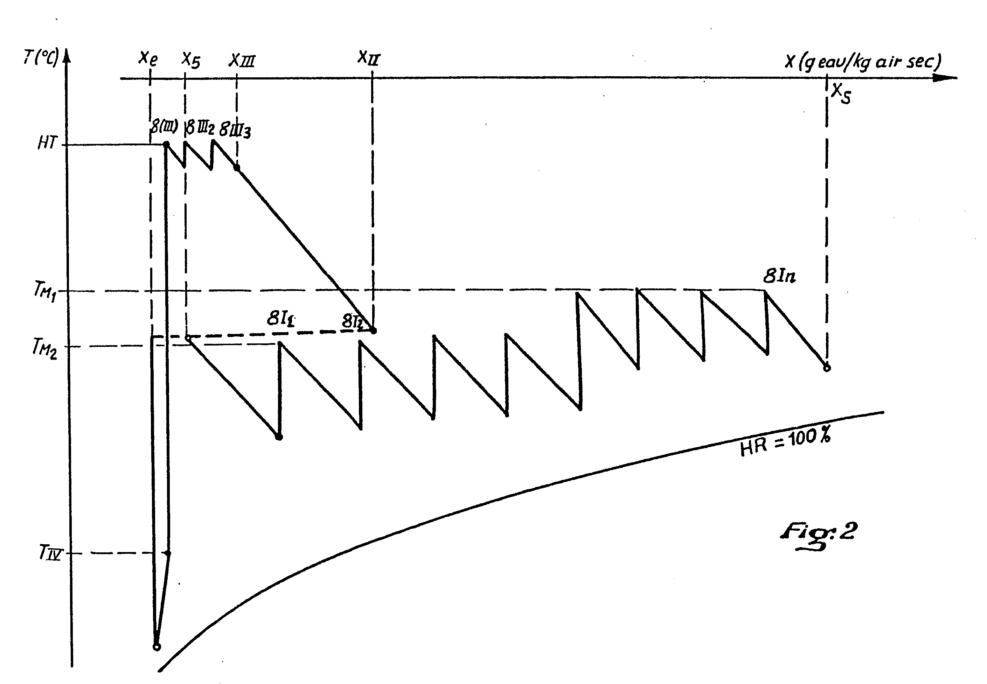

La figure 1 est un graphique indiquant les variations de la température et de la teneur en eau en gramme par kilogramme d'air sec de l'air de séchage ainsi que la température du produit ; la figure 2 est le diagramme de Mollier indiquant les paramètres de l'air au cours du processus aux différents points de l'installation ;

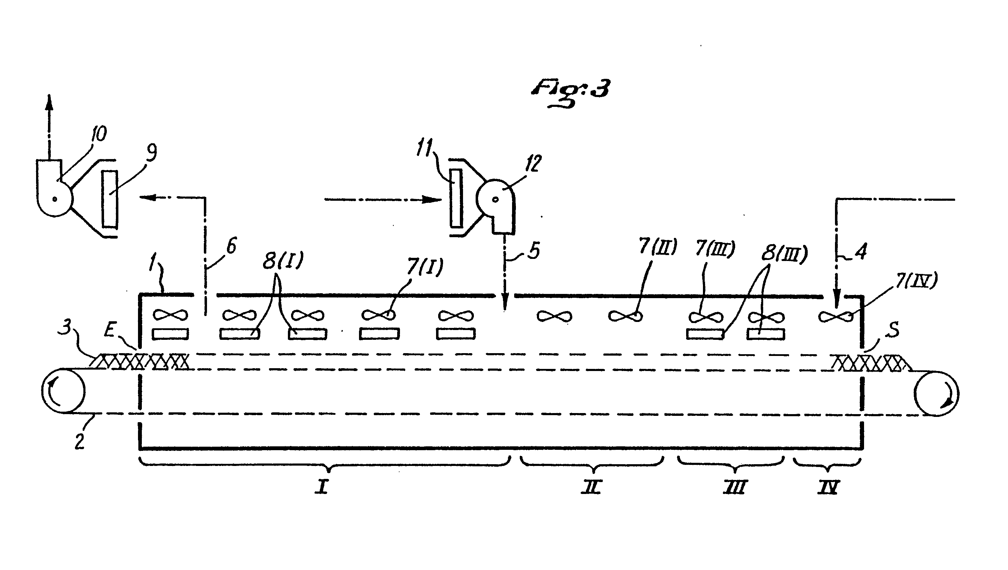

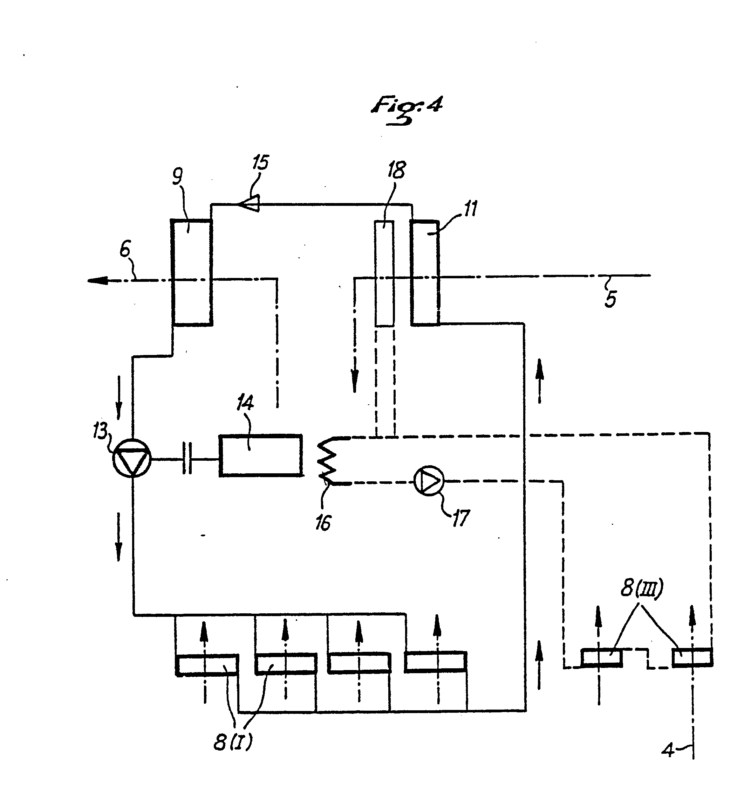

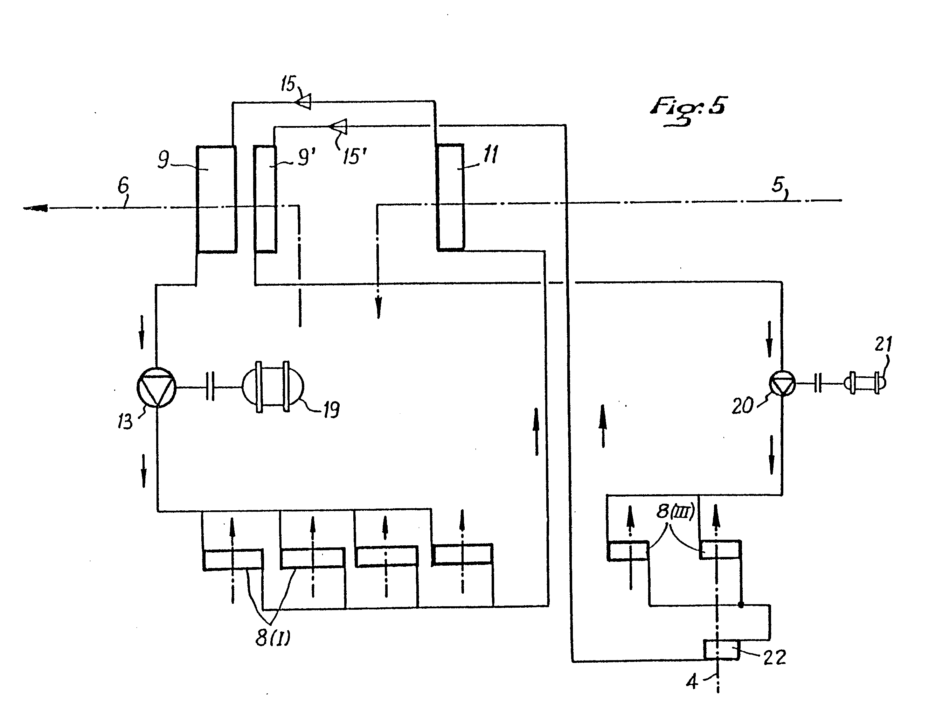

la figure 3 est un schéma de l'installation destiné à expliquer le procédé ; la figure 4 est un schéma du circuit thermique de l'installation dans le cas d'une pompe à chaleur de récupération entraînée par un moteur thermique et la figure 5 est un schéma correspondant à la figure 4 dans le cas de pompes à chaleur entraînées par des moteurs électriques.

L'installation telle qu'illustrée dans son principe à la figure 3, comporte une enceinte allongée 1 dans laquelle est installé un transporteur représenté ici par le brin supérieur d'une bande transporteuse 2 sur lequel est disposé en une couche 3, le produit à sécher, la bande transporteuse et la couche étant perméables à l'air. Le transporteur pourrait être de tout autre type quelconque tel qu'à nacelles ou casiers, pneumatique, à lit fluidisé, etc., selon la nature et la forme du matériau à sécher. Le produit est introduit dans l'enceinte par une entrée E et en sort par une sortie S. Il peut circuler en continu ou par saccades sous réserve de séjourner dans l'enceinte pendant le temps requis pour les échanges thermiques. L'enceinte est subdivisée en quatre zones I à IV dont la nature sera expliquée ci-après. Elle comporte deux entrées d'air 4 et 5, la première au droit de la zone IV et la seconde entre les zones I et II, et une sortie d'air 6 dans la zone I au voisinage de l'entrée E de l'enceinte. Des brasseurs, tels que des ventilateurs 7, assurent le brassage transversal du flux d'air circulant des entrées vers la sortie pour lui faire traverser la couche 3 du produit ou le faire circuler au contact des produits lorsqu'il s'agit de produits en forme. Des échangeurs thermiques 8 sont prévus dans les zones I (8 (I)) et III (8 (III)) et un évaporateur 9 de pompe à chaleur est prévu dans le circuit d'extraction 10 de la sortie 6 et un condenseur 11 de pompe à chaleur ou autre échangeur thermique est prévu sur le circuit d'introduction 12 de l'entrée 5.

Dans l'installation, la zone I est la zone principale de séchage ou de traitement à température moyenne dans laquelle la majeure partie de l'eau du produit est transférée à l'air de séchage, la zone II est une zone de transition, la zone III est une zone de séchage final ou de traitement à haute température et la zone IV est une zone de refroidissement du produit séché.

De l'air sec à la température ambiante est introduit en 4 et est brassé par le ventilateur 7 (IV) pour traverser la couche 3 de produit en fin de traitement. Ce premier débit d'air Vap, conformément à l'invention, représente une fraction par exemple le cinquième du débit d'air total nécessaire pour, à la température Ts de l'air à la sortie et une teneur en eau $X_s$ en grammes d'eau par kilogramme d'air sec, évacuer l'eau à extraire du produit introduit en E. Par cette circulation à travers le produit, l'air est réchauffé à la température T (IV) (Figure 1). On pourrait, sans sortir du cadre de l'invention, supprimer la zone IV mais ce refroidissement permet de récupérer des calories contenues dans le produit traité.

Le débit d'air brassé par les ventilateurs 7 (III) circule à travers la couche 3 en passant sur des échangeurs thermiques 8 $(III)_1$, $8(III)_2$, $8(III)_3$. Pendant le passage sur chaque échangeur le débit d'air est chauffé à une haute température HT et il se refroidit en abandonnant des calories au produit qu'il traverse pour le chauffer et évaporer le reliquat d'eau. Le produit étant déjà presque sec l'accroissement du taux d'humidité X de l'air dans la zone III est faible et l'apport calorifique nécessaire pour compenser la chaleur d'évaporation est faible. Ceci explique que l'apport calorifique dans la zone III avec des calories à haute température ne représente que, par exemple 10 à 15 %, de l'apport calorifique total, ledit apport étant concentré sur un débit d'air réduit.

Dans la zone II, le débit d'air primaire qui circule au contact d'un produit de plus en plus froid et de plus en plus humide se charge d'humidité (de X (III) à X (II) dans la figure 1) et sa température décroît.

On introduit à ce moment, au point 5, le débit d'air complémentaire Vac, ce débit d'air ayant de préférence été préchauffé à la température moyenne $TM_2$ qui est sensiblement égale à la température atteinte par le débit d'air à la sortie de la zone II. Du fait de cette introduction d'un débit d'air sec le degré d'humidité de l'air tombe de X (II) à $X_5$.

Dans la zone I, l'air brassé par les ventilateurs 7 (I) pour traverser la couche 3 et passer sur des échangeurs thermiques $8I_1$, $8I_2$, ..., $8I_n$ se refroidit en évaporant de l'eau du produit et se réchauffe en passant sur chaque échangeur lesquels sont à une température moyenne TM. Le débit d'air global Va sort alors à une température $Ts_1$ avec un taux d'humidité $Xs_1$.

Il est possible, comme représenté dans les figures, de mettre en œuvre dans une première partie $I_2$ de la zone I, une température moyenne $TM_2$ et de mettre en œuvre dans une seconde partie $I_1$ une autre température moyenne $TM_1$

plus élevée, ce qui est intéressant lorsque l'on dispose de sources de calories à des températures moyennes différentes afin de relever le coefficient de performance des pompes à chaleur.

Les courbes des figures 1 et 2 sont des courbes théoriques simplifiées destinées à expliquer le procédé. La zone entre les deux courbes Tmin et Tmax délimite la variation de la température du débit d'air par échange avec le produit et avec les échangeurs assurant son réchauffage et la courbe $T_p$ représente la température du produit mais les allures des courbes peuvent changer en fonction de l'humidité du produit, des températures et de la nature des échangeurs, etc. Il est possible, et cela constitue un avantage du procédé, de jouer sur les différents facteurs, volumes, températures et degrés d'humidité des volumes d'air introduits notamment, pour faire varier l'allure de la courbe de température du produit, par exemple en y créant des paliers, et l'allure de la courbe (non représentée) de la teneur en humidité du produit. Ceci permet de traiter par le procédé de l'invention les produits les plus variés tels que malt, engrais, fourrages, luzerne, pulpe de betterave, textiles, non tissés, tuiles, briques, etc. en adaptant à chaque produit la nature du transporteur telle que lit fluidisé, bande sans fin poreuse, à chariots, à clayettes, à balancelles, etc.

L'avantage important du procédé réside dans la réduction de l'apport thermique à haute température, la majeure partie de l'apport thermique, par exemple 85 à 90 %, étant effectuée à températures moyennes ce qui permet de réaliser, avec un rendement élevé, cet apport thermique par des pompes à chaleur.

Deux exemples d'installations utilisant des pompes à chaleur sont décrits ci-après avec références aux figures 4 et 5, les mêmes références étant utilisées dans les deux figures pour désigner les mêmes éléments que dans la figure 3. La circulation de l'air est indiquée par des flèches en traits mixtes, la circulation des fluides frigorigènes par des traits pleins et celle de l'eau par des tiretés.

Dans l'exemple de la figure 3, le compresseur 13 de la pompe à chaleur fonctionnant à basse température est entraîné par un moteur thermique 14. Le fluide frigorigène comprimé et chaud est envoyé aux échangeurs 8 (I) à température moyenne comme décrit ci-dessus puis il passe dans un échangeur sous refroidisseur de récupération 11 dans lequel il réchauffe l'air neuf complémentaire introduit en 5 puis, après passage dans un détendeur 15, il se vaporise dans l'évaporateur 9 qui récupère les calories du flux d'air sortant 6.

Les rejets calorifiques du moteur thermique 14, à savoir la chaleur récupérée sur le refroidissement du moteur et celle contenue dans les gaz d'échappement, sont récupérés par un échangeur 16 placé dans un circuit d'eau chaude avec une pompe de circulation 17 qui alimente les échangeurs 8 (III) de la zone finale III à haute température. La quantité de chaleur récupérée sur le moteur thermique suffit pour satisfaire les besoins en apports calorifiques à haute température de la zone III. En cas d'excès, un by-pass permet de diriger cet excès dans un échangeur 18 de post-chauffage de l'air neuf complémentaire introduit en 5 en aval du sous-refroidisseur récupérateur 11.

Dans le cas de la figure 5, le compresseur 13 est entraîné par un moteur électrique 19 et le circuit de la pompe à chaleur est identique à celui décrit avec référence à la figure 4. Cette pompe à chaleur qui fonctionne à température moyenne et fournit la partie principale de la puissance calorifique totale nécessaire à un coefficient de performance élevé. La puissance calorifique à haute température est fournie également par une pompe à chaleur mais à coefficient de performance moindre qui toutefois ne fournit qu'une faible partie de la puissance calorifique totale. Dans la figure, 20 désigne le compresseur de cette pompe à chaleur à haute température, 21 son moteur électrique d'entraînement, 22 un sous-refroidisseur récupérateur monté en aval des échangeurs 8 (III) pour préchauffer l'air primaire entrant en 4, 15' son détendeur et 9' son évaporateur monté dans le circuit d'extraction de la sortie 6 en amont de l'évaporateur 9 de la pompe à chaleur à température moyenne.

**Revendications**

1. Un procédé de séchage en continu, ou quasi continu, de produits pour lesquels on doit ou on peut utiliser des températures croissantes vers la fin du processus de séchage et mettant en œuvre un brassage transversal multiple dans lequel un flux d'air de séchage circule à contre-courant du produit à sécher et transversalement en venant au contact dudit produit et dans lequel on introduit dans la zone correspondant à la fin du processus de séchage, un premier débit d'air représentant une fraction du débit total mis en œuvre, un débit d'air complémentaire, qui se combine avec ce premier débit d'air pour constituer le débit total, étant introduit dans une zone ou le produit a perdu la majeure partie de l'humidité à éliminer, le premier débit d'air, introduit dans la zone finale du processus de séchage, et représentant une faible fraction du débit total faisant l'objet d'apports de chaleur provenant d'une source à haute température, le débit d'air complémentaire étant, avant son introduction, chauffé sensiblement à la température moyenne atteinte par le premier débit d'air refroidi par évaporation de l'eau dans la zone finale et le débit d'air total faisant l'objet, dans la zone du processus de séchage située entre le point d'introduction du débit complémentaire et le point d'extraction du débit d'air total d'apports calorifiques à température ou températures moyennes, provenant d'au moins une pompe à chaleur.

2. Un procédé selon la revendication 1, caractérisé en ce que le débit d'air de séchage passe de la zone des apports à haute température à la zone des apports à moyenne température en traversant une zone de transition sans apport calorifique dans laquelle sa température devient sensiblement égale à celle des apports calorifiques à moyenne température.

3. Un procédé selon l'une quelconque des revendications 1 et 2, caractérisé en ce que l'on règle le premier débit d'air pour obtenir, au point d'introduction du débit d'air complémentaire, une température sensiblement égale à celle des apports calorifiques à moyenne température.

4. Une installation pour la mise en œuvre du procédé selon l'une quelconque des revendications 1 à 3, du type comprenant une enceinte allongée, un transporteur continu ou quasi continu transportant le produit à sécher sous une forme constituant une couche perméable à l'air, de l'entrée jusqu'à la sortie de l'enceinte, des moyens pour introduire dans la zone de l'enceinte voisine de la sortie, un premier débit d'air de séchage, des moyens pour faire traverser la couche de produits par ledit débit d'air ainsi que le débit total et des moyens pour extraire le débit total dans la zone de l'enceinte voisine de l'entrée du produit avec des moyens pour introduire un débit complémentaire d'air de séchage dans une zone intermédiaire de l'enceinte et des moyens (8 (III)) pour chauffer à haute température le premier débit d'air de séchage et lui apporter dans l'enceinte des calories à haute température et des moyens (11) pour chauffer, avant son introduction, l'air constituant le débit complémentaire à moyenne température et des moyens (8 (I)) pour apporter dans l'enceinte, entre le point d'introduction de ce débit complémentaire et le point (6) d'extraction du débit d'air total des calories à moyenne température, ces deux derniers moyens étant constitués par le ou les condenseurs (8 (I)) d'au moins une pompe à chaleur (13) récupérant les calories de l'air humide extrait de l'installation.

5. Une installation selon la revendication 4, caractérisée en ce que lorsque la ou les pompes à chaleur (13) sont entraînées par un ou des moteurs thermiques (14), les moyens (16) pour chauffer le premier débit d'air et fournir les calories à haute température utilisent au moins pour partie les rejets thermiques du ou des moteurs (14).

6. Une installation selon la revendication 4, caractérisée en ce que lorsque la ou les pompes à chaleur (13) alimentant les condenseurs à moyenne température sont entraînées par des moteurs électriques (19), les moyens pour chauffer le premier débit d'air et fournir les calories à haute température sont constitués par des pompes à chaleur (20) fonctionnant à haute température distinctes desdites pompes à chaleur (13) fonctionnant à moyenne température.

7. Une installation selon l'une quelconque des revendications 4 à 6, caractérisée en ce que l'air neuf constituant le débit complémentaire est préchauffé par passage sur un échangeur (11) de refroidissement du condensat provenant des condenseurs (8 (I)) des pompes à chaleur.

8. Une installation selon l'une quelconque des revendications 4 à 7, caractérisée en ce que les pompes à chaleur fonctionnent selon le système à condensation indirecte, leur condenseur réchauffant l'eau d'un circuit d'eau chaude alimentant des échangeurs de chauffage (8) placés dans l'enceinte.

### Claims

1. A process for the continuous, or substantially continuous, drying of products, during which drying process increasing temperatures should or can be used towards the end of the drying and using a multiple transverse stirring wherein a flow of drying air is fed in coutercurrent relationship to the product to be dried and transversely as it comes into contact with said product, and in which there is fed in that zone corresponding to the end of the drying process a first air flow accounting for a part of the entire flow introduced, an additional air flow, which combines with said first air flow for forming the entire flow, being introduced in that zone where the product has lost the major portion of the moisture to be removed, the first air flow, introduced in the terminal zone of the drying process, and representing a small portion of the entire flow which is the object of heat inputs from a source at a high temperature, the additional air flow, before its introduction, being heated substantially to the mean temperature reached by the first air flow cooled down by the evaporation of the water in the terminal zone and the entire air flow being the object, in that zone of said drying process which lies between the point of introduction of the additional flow and the point of extraction of the entire air flow, of heat inputs at a mean temperature or at mean temperatures, derived from at least one heat pump.

2. A process according to claim 1, characterized in that the drying air flow proceeds from the zone of high temperature inputs to the zone of mean temperature heat inputs by flowing through a transition region without heat input, wherein its temperature becomes substantially equal to that of the heat inputs at mean temperature.

3. A process according to any one of claims 1 and 2, characterized in that the first air flow is adjusted to afford, at the point of introduction of the additional air flow, a temperature substantially equal to that of the heat inputs at mean temperature.

4. A plant for carrying into effect the process according to any one of claims 1 to 3, of the type comprising an elongated enclosure, a continuous or substantially continuous conveyor carrying the products to be dried under a form constituting an air-permeable bed, from the inlet to the outlet of the enclosure, means for admitting into the enclosure zone which lies close to the outlet a first flow of drying air, means to cause said air flow as well as the entire air flow to pass through the product bed and means for withdrawing said total air flow from the enclosure zone which lies close to the product inlet, with means for admitting an additional flow of drying air into one intermediate zone of the enclosure and means (8 (III)) for heating to a high temperature the first flow of drying air and supplying thereto within the enclosure heat at high temperature and means (11) for heating, before its admission, the air constituting the additional flow to a mean temperature and means (8 (I)) for bringing into the enclosure, between the point of introduction of said additional flow and the point of extraction (6) of the entire air flow, heat at a mean temperature, said two last means being constituted by the condenser or condensers (8 (I)) of at least one heat pump (13) recovering heat from the moist air withdrawn from the plant.

5. A plant according to claim 4, characterized in that when the air pump or air pumps (13) are driven by one heat engine or engines (14), the means (16) for heating the first air flow and provide the heat at a high temperature make use at least for a part of the heat output from the engine or engines (14).

6. A plant according to claim 4, characterized in that when the heat pump or heat pumps (13) feeding the condensers at a mean temperature are driven by electric motors (19), the means for heating the first air flow and providing the heat at a high temperature are constituted by heat pumps (20) operating at a high temperature and distinct from said heat pumps (13) operating at the mean temperature.

7. A plant according to any one of claims 4 to 6, characterized in that the fresh air constituting the extra flow is preheated by·passing on a cooling exchanger (11) of the condensate arriving from the condensers (8 (I)) of the heat pumps.

8. A plant according to any one of claims 4 to 7, characterized in that the heat pumps operate according to the indirect condensation system, their condenser reheating the water of a warm water circuit feeding the heating exchangers (8) placed inside the enclosure.

### Patentansprüche

1. Verfahren zum kontinuierlichen oder praktisch kontinuierlichen Trocknen von Produkten, bei denen am Ende des Trocknens steigende Temperaturen verwendet werden müssen oder können, durch mehrfache Querumwälzung, wobei
— ein Trockenluftstrom im Gegenstrom und quer zum zu trocknenden Produkt zirkuliert und mit dem Produkt in Berührung kommt,
— in die dem Ende des Trocknens entsprechende Zone eine erste, einem Teil der eingesetzten Gesamtluftmenge entsprechende Luftmenge eingebracht wird,
— eine zusätzliche Luftmenge, die mit der ersten Luftmenge zur Gesamtmenge kombiniert wird, in eine Zone eingeführt wird, in der das Produkt den größten Teil der zu entfernenden Feuchtigkeit bereits abgegeben hat,
— die erste Luftmenge, die in die Trockenendzone eingeführt und einen kleinen Teil der Gesamtluftmenge darstellt, Wärme aus einer Hochtemperaturquelle zuführt,

— die zusätzliche Luftmenge vor ihrer Zufuhr praktisch auf die mittlere Temperatur erhitzt wird, die von der ersten, durch die Wasserverdampfung in der Endzone abgekühlte Luftmenge erreicht wird, und

— die Gesamtluftmenge, in der Trockenzone zwischen der Zufuhr der zusätzlichen Luftmenge und der Abfuhr der Gesamtluftmenge, Wärme von mittlerer Temperatur oder mittleren Temperaturen zuführt, die von mindestens einer Wärmepumpe stammt.

2. Verfahren nach Anspruch 1, dadurch gekennzeichnet, daß die Trockenluftmenge von der Wärmezufuhrzone mit hoher Temperatur zur Wärmezufuhrzone mit mittlerer Temperatur über eine Übergangszone ohne Wärmezufuhr geleitet wird, in der sich ihre Temperatur an die der Wärmezufuhrzone mit mittlerer Temperatur angleicht.

3. Verfahren nach Anspruch 1 oder 2, dadurch gekennzeichnet, daß die erste Luftmenge so eingestellt wird, daß an der Zufuhr der zusätzlichen Luftmenge eine der Wärmezufuhrzone mit mittlerer Temperatur praktisch gleiche Temperatur erhalten wird.

4. Vorrichtung zur Durchführung des Verfahrens nach einem der Ansprüche 1 bis 3, mit

— einem länglichen Gehäuse,

— einem kontinuierlichen oder praktisch kontinuierlichen Förderer zur Beförderung des zu trocknenden Produkts in Form einer luftdurchlässigen Schicht vom Eingang bis zum Ausgang des Gehäuses,

— Einrichtungen zur Zufuhr einer ersten Trockenluftmenge in die dem Ausgang benachbarte Zone,

— Einrichtungen zum Durchleiten des Luftstroms und der Gesamtluftmenge durch die Produktschicht,

— Einrichtungen zum Abführen der Gesamtluftmenge in der dem Eingang des Produkts benachbarten Gehäusezone,

— Einrichtungen zur Zufuhr der zusätzlichen Trockenluftmenge in eine Zwischenzone des Gehäuses,

— Einrichtungen (8 (III)) zum Erhitzen der ersten Trockenluftmenge auf eine hohe Temperatur, um ihr im Gehäuse eine Wärmemenge mit hoher Temperatur zu verleihen,

— Einrichtungen (11) zum Erhitzen der zusätzlichen Luftmenge vor ihrer Zufuhr auf eine mittlere Temperatur und

— Einrichtungen (8 (I)) zur Zufuhr in das Gehäuse, zwischen der Zufuhr dieser zusätzlichen Luftmenge und der Abfuhr (6) der Gesamtluftmenge, einer Wärmemenge mit mittlerer Temperatur,

wobei diese beiden letzten Einrichtungen aus dem oder den Kondensator (en) (8 (I)) mindestens einer Wärmepumpe (13) bestehen, die die Wärmemenge aus der aus der Vorrichtung abgeführten feuchten Luft zurückgewinnt.

5. Vorrichtung nach Anspruch 4, dadurch gekennzeichnet, daß, wenn die Wärmepumpe (n) (13) von einem Verbrennungsmotor oder -motoren (14) betrieben wird (werden), die Einrichtungen (16) zum Erhitzen der ersten Luftmenge und zur Zufuhr der Wärme mit hoher Temperatur zumindest teilweise die Wärmeabfuhr des Motors oder der Motoren (14) verwenden.

6. Vorrichtung nach Anspruch 4, dadurch gekennzeichnet, daß, wenn die die Kondensation mit mittlerer Temperatur versorgende (n) Wärmepumpe (n) (13) von Elektromotoren (19) angetrieben wird (werden), die Einrichtungen zum Erhitzen der ersten Luftmenge und zur Zufuhr von Wärme mit hoher Temperatur aus Wärmepumpen (20) bestehen, die bei hoher Temperatur betrieben werden und von den bei mittlerer Temperatur betriebenen Wärmepumpen (13) verschieden sind.

7. Vorrichtung nach einem der Ansprüche 4 bis 6, dadurch gekennzeichnet, daß die die zusätzliche Luftmenge bildende Frischluft durch Leiten über einen Kühler für das aus den Kondensatoren (8 (I)) der Wärmepumpen kommende Kondensat vorgewärmt wird.

8. Vorrichtung nach einem der Ansprüche 4 bis 7, dadurch gekennzeichnet, daß die Wärmepumpen nach dem indirekten Kondensationssystem betrieben werden, wobei ihr Kondensator das Wasser eines Warmwasserkreislaufs erwärmt, der Wärmeaustauscher (8) im Gehäuse versorgt.

Fig:1

Fig. 2

Fig.3

0 119 931

0 1 1 9 9 3 1

Fig. 4

Fig.5